# DEMANDE DE BREVET EUROPEEN

(11) **EP 3 786 445 A1**
(43) Date de publication de la demande: **03.03.2021**
(21) Numéro de dépôt: 20193443.7
(22) Date de dépôt: 28.08.2020
(51) Int. Cl.: F03D 3/04, F03D 9/45

(54) **DISPOSITIF EOLIEN POUR LA RECUPERATION DE L'ENERGIE EOLIENNE POUR DES BÂTIMENTS**

(30) Priorité: 30.08.2019 FR 1909599
(71) Demandeur: WIND MY ROOF, 95270 Luzarches (FR)
(72) Inventeur: BRICHOT, Antoine, 95270 LUZARCHES (FR); MAACHA, Yanis, 33240 SAINT GERMAIN LA RIVIERE (FR); LAFOUX, Baptiste, 69006 LYON (FR)
(74) Mandataire: IPAZ

(57) **Abrégé**

L'invention concerne un dispositif éolien (1) comprenant une carène (2) qui présente deux parois latérales (21), une paroi inférieure (22) et une paroi supérieure (23) définissant une enceinte (E) présentant une face dite avant (24) et une face dite arrière (25) pourvues respectivement d'une ouverture, enceinte (E) dans laquelle une turbine (3) est montée entraînable en rotation autour d'un axe de rotation (31) s'étendant horizontalement entre les deux parois latérales (21), sous l'effet d'un flux d'air entrant depuis la face avant (24), le dispositif comprenant un déflecteur (4), s'étendant depuis la partie inférieure de la face avant (24) vers l'intérieur de l'enceinte (E) et en direction de la paroi supérieure (23) et définissant avec cette dernière un canal d'entrée d'air (5) guidant le flux d'air jusqu'à la turbine (3).

L'invention consiste en ce que le déflecteur (4) s'étend depuis la face avant (24) jusqu'à la périphérie de la turbine (3), au moins jusqu'à mi-hauteur de ladite turbine (3), et la paroi supérieure (23) de la carène (2) s'étend au-dessus de la turbine (3), écartée de ladite turbine (3), le canal d'entrée d'air (5) défini par ledit déflecteur (4) et ladite paroi supérieure (23) débouchant sur la partie supérieure de la turbine (3), s'étendant sensiblement entre l'axe de rotation (31) et la paroi supérieure de la carène (2).

## Description

La présente invention concerne le domaine des énergies renouvelables et plus particulièrement les dispositifs de récupération de l'énergie éolienne pour les bâtiments tels que des immeubles, bâtiments commerciaux ou industriels dont le toit est plat.

Les dispositifs éoliens connus comportent tous au moins un élément apte à être placé en opposition à un flux d'air, et monté pivotant sur un arbre qui peut être d'axe horizontal ou vertical, dirigé dans le sens dudit flux, ou transversalement à celui-ci. Les dispositifs éoliens peuvent comprendre une turbine présentant un nombre d'ailettes, la turbine étant entraînée en rotation sous l'effet d'un flux d'air heurtant les ailettes. La turbine est couplée à un générateur pour convertir l'énergie éolienne en énergie électrique utilisable.

A l'heure actuelle, on développe de plus en plus l'exploitation des énergies renouvelables associée à la construction de bâtiment à basse consommation, voir passifs ou même positifs. En particulier, le développement de dispositifs éoliens a connu une forte croissance en relation avec la construction de maisons ou d'immeubles d'habitation ou à usage professionnel. De tels dispositifs éoliens sont généralement soit montés sur des structures spécifiques tels que des mâts soit installés sur les bâtiments eux-mêmes.

Dans cette dernière catégorie, on a proposé de nombreux dispositifs visant en particulier à s'intégrer au moins en partie dans le bâtiment lui-même, en particulier au niveau de la toiture.

Ainsi, on a décrit des dispositifs éoliens comprenant un rotor à ailettes ou à pales mobiles, monté dans un carter qui définit au moins partiellement un canal concentrateur de flux et monté au sommet d'un toit tel que défini notamment dans FR-A-2939172. Dans ce document, on propose une éolienne de toiture qui comporte un rotor éolien disposé au faîte d'un toit et qui est surmonté d'un châssis comportant un toit de protection, qui renferme un carter délimitant une cavité de forme semi-cylindrique ou en partie semi-cylindrique qui loge par le dessus une partie dudit rotor éolien, ce qui permet de soustraire à l'action du vent la partie supérieure de ce dernier pour que seule sa partie basse soit accessible aux vents. L'installation de ce module est protubérante et aboutit à une modification de l'apparence extérieure du bâtiment et sollicite la structure de ce dernier ce qui pose de nombreux inconvénients.

Dans FR-A-2962171 on a proposé un dispositif de récupération d'énergie éolienne pour maisons, immeubles ou bâtiments analogues, définissant au moins une façade proéminente par rapport au sol, ce dispositif comprenant, d'une part, au moins un rotor éolien monté à rotation dans un canal exposé aux vents et pouvant être traversé par un flux d'air impactant les pales dudit rotor et, d'autre part, au moins une génératrice pouvant être reliée en entraînement avec ledit rotor. Le canal est configuré pour former une structure à effet Venturi pour capter, guider et accélérer le vent, et s'étend à travers le bâtiment de part en part. le dispositif est au moins partiellement intégré dans une section ou un étage intermédiaire du bâtiment ou du toit de ce dernier, de telle manière que la façade concernée constitue un obstacle au passage du vent autour de l'ouverture d'entrée, et éventuellement de l'ouverture de sortie, dudit canal traversant, le rotor étant installé dans le segment du canal présentant la section de passage la plus faible. Un tel dispositif s'il est intégrable dans un toit de maison devient difficile à mettre en place dans un immeuble d'habitation ou industriel.

Pour les immeubles d'habitation collectifs ou les bâtiments industriels, on a proposé également des dispositifs éoliens positionnables sur le bord de toit plat de ce type de bâtiment.

Dans les environnements urbains, en particulier sur les immeubles d'une certaine hauteur, le vent est souvent accéléré à travers les rues entre les bâtiments et accéléré également vers le haut des façades des bâtiments. Lorsque le vent frappe une façade relativement plane d'un bâtiment il est dévié vers le haut de la façade pour être évacué par-dessus le toit et transversalement pour s'évacuer sur les côtés du bâtiment. De ce fait, on a proposé de mettre en place sur le toit de ce type de bâtiment des dispositifs éoliens permettant de récupérer le flux d'air ascendant.

Ainsi, dans GB-A-2458752 on décrit une éolienne comportant une structure de carène pourvue d'une partie inférieure présentant une surface convexe et une surface concave guidant le flux d'air provenant de l'avant ou de l'arrière vers une turbine tandis qu'un auvent en partie supérieure est pourvu de deux surfaces concaves dont une guidant le flux d'air jusqu'au-dessus de la turbine. La partie inférieure de la carène est positionnée le long du bord du toit d'un bâtiment et l'auvent en partie supérieure est ménagé de sorte à être proéminent par rapport à la façade du bâtiment sur lequel le dispositif est installé, ce qui permet de capter encore mieux le flux d'air ascendant le long de la façade.

Dans EP-A-2 821644 on a proposé un dispositif éolien comportant une carène enfermant un rotor. Cette carène est positionnée au bord du toit plat d'un bâtiment et présente une entrée d'air ménagée de manière à faire saillie du bord du toit de sorte à récupérer le flux ascendant d'air le long de la façade et le guider ainsi vers le rotor.

Ces dispositifs éoliens contenus dans des carènes permettent une mise en place le long du bord du toit plat d'un bâtiment, simple à mettre en oeuvre et ne nécessitant pas d'aménagements spécifiques du bâtiment.

Toutefois, de tels dispositifs présentent un inconvénient majeur en ce qu'ils sont agencés pour faire saillie de la façade en vue de récupérer de manière efficace le flux d'air ascendant le long de la façade, ce qui est interdit par les normes d'urbanisme actuellement en vigueur dans certains pays, dont la France.

Dans US-A-2008/0061559 est proposé un dispositif éolien comportant une carène présentant une face avant et une face arrière, le vent s'engouffrant dans la carène par la face avant jusqu'à une turbine entraînée alors en rotation. Un canal d'entrée d'air est ainsi défini entre les paroi supérieure et latérales ainsi que par un déflecteur s'étendant depuis la paroi inférieure jusqu'à la partie supérieure de la turbine. Le flux d'air est ainsi guidé jusqu'aux pales pour entraîner la turbine en rotation. La distance entre la paroi supérieure et les pales de la turbine doit être la plus petite possible pour éviter que le flux d'air est guidé sur les pales et ne peut les éviter. Une telle structure de dispositif éolien oppose donc une certaine résistance au flux d'air ce qui nécessite un arrêt de la turbine en cas de vents trop forts. Ce dispositif est monté à l'extrémité d'un mât et reste donc de taille relativement réduite.

Dans WO-A-2010/118509 est proposée une éolienne horizontale dont le canal d'entrée d'air présente un volet réglable permettant de modifier la forme du canal pour engendrer un effet venturi. Le canal d'entrée d'air est ainsi défini entre une rampe inclinée inférieure et un volet, monté pivotant à l'aide de pistons entre une position ouverte et une position fermée selon différentes positions. Toutefois, une telle structure positionnable sur un toit, pour être robuste en cas de vents forts, doit présenter au niveau des moyens de déplacement du volet des caractéristiques de résistance mécanique élevées qui augmentent le coût de fabrication ou engendrent des risques de casse.

La présente invention a donc pour but de proposer un dispositif éolien ou éolienne qui peut être installé sur le toit d'un bâtiment en vue de récupérer l'énergie éolienne des flux d'air ascendants le long de la façade sans que le dispositif éolien ne soit en saillie par rapport à cette façade, tout en étant performant en termes de récupération d'énergie éolienne et simple à mettre en œuvre. De plus, la présente invention propose de mettre en œuvre un dispositif robuste, résistant à des vents forts et ce, avec une structure ni complexifiée ni coûteuse.

A cet effet, l'invention concerne un dispositif éolien comportant une turbine montée en rotation autour d'un axe et contenue dans une carène, ce dispositif étant positionnable au bord d'un toit sans partie saillante par rapport à la façade du bâtiment mais pouvant recueillir un flux d'air depuis une entrée d'air permettant un fonctionnement optimal de la turbine.

A cet effet, l'invention concerne un dispositif éolien comprenant une carène qui présente deux parois latérales, une paroi inférieure et une paroi supérieure définissant une enceinte présentant une face dite avant et une face dite arrière pourvues respectivement d'une ouverture, enceinte dans laquelle une turbine est montée entraînable en rotation autour d'un axe de rotation s'étendant horizontalement entre les deux parois latérales sous l'effet d'un flux d'air entrant depuis la face avant, le dispositif comprenant un déflecteur s'étendant depuis la partie inférieure de la face avant vers l'intérieur de l'enceinte et en direction de la paroi supérieure et définissant avec cette dernière un canal d'entrée d'air guidant le flux d'air jusqu'à la turbine, caractérisé en ce que le déflecteur s'étend depuis la face avant jusqu'à la périphérie de la turbine, au moins jusqu'à mi-hauteur de ladite turbine, et la paroi supérieure de la carène s'étend au-dessus de la turbine, écartée de ladite turbine, le canal d'entrée d'air défini par ledit déflecteur et ladite paroi supérieure débouchant sur la partie supérieure de la turbine, s'étendant sensiblement entre l'axe de rotation de la turbine et la paroi supérieure de la carène.

De manière avantageuse, le dispositif éolien lorsqu'il est installé sur le bord du toit d'un bâtiment présente un canal d'entrée d'air qui permet de guider l'air uniquement dans la partie supérieure de la turbine et éventuellement au-dessus de celle-ci, avec une circulation optimale du flux d'air récupéré.

Selon une forme de réalisation avantageuse, le dispositif comporte en outre, entre le déflecteur et la turbine, un volet de régulation du flux d'air entrant, s'étendant orthogonalement à la paroi inférieure et entraînable en translation le long des parois latérales entre une position d'ouverture du canal d'entrée d'air et une position de fermeture de ce canal d'entrée d'air.

De manière avantageuse, le volet de régulation permet de fermer le canal d'entrée d'air de manière sûre et robuste en cas de vents trop violents.

De manière avantageuse, le volet de régulation qui s'étend parallèlement aux faces avant et arrière de la carène, à l'arrière du déflecteur du canal d'entrée d'air peut être entraîné le long d'axes orthogonaux à la paroi inférieure de la carène, selon un déplacement vertical et offre ainsi moins de prise aux vents, ce qui rend la structure du dispositif éolien beaucoup plus robuste qu'une structure avec un ou des volets de fermeture pivotants montés sur une face avant.

De préférence, le dispositif comporte des moyens d'entrainement en déplacement du volet qui sont constitués de moyens de guidage du volet le long des parois latérales tels que des rails et des moyens de levage du volet tels que des câbles et un treuil. Tous autres moyens d'entraînement appropriés peuvent être utilisés. De manière avantageuse, ces moyens d'entraînement en déplacement sont robustes et économiquement avantageux.

En outre, le volet de régulation peut être positionné à différentes positions intermédiaires entre la position d'ouverture complète et la position de fermeture complète du canal d'entrée d'air de sorte qu'il est possible de réguler le flux d'air entrant dans la turbine ce qui permet de réguler la puissance engendrée.

Quelle que soit la turbine utilisée, elle est montée dans la carène, avec ses pales ou ailettes, entraînables en rotation par le flux d'air entrant depuis la face avant. De manière avantageuse, le guidage du flux d'air vers la partie supérieure, et éventuellement au-dessus, de la turbine permet d'entraîner celle-ci quasiment sans « résistance ». On évite ainsi avantageusement que le flux d'air arrivant sur une plus grande partie de la partie avant de la turbine, ne vienne alors heurter les pales ou ailettes avec une direction d'entraînement opposée ce qui rendrait le dispositif bien moins efficace et génère des « résistances ». Un dispositif éolien selon l'invention permet de ne travailler qu'en traînée, sans effet de portance des ailettes ou pales.

Le flux d'air du dispositif éolien selon l'invention n'entre ainsi dans la turbine qu'avec un mouvement d'entraînement en rotation de celle-ci, toujours dans le même sens, donc de manière hautement efficace.

Selon une forme de réalisation préférée de l'invention, ledit canal d'entrée d'air s'étend jusqu'au-dessus de ladite turbine.

De manière avantageuse, la face avant de la carène, ouverte, s'étend perpendiculaire à la paroi inférieure, entre les extrémités des parois inférieure et supérieure qui sont à l'aplomb l'une de l'autre. Cette face avant de la carène ouverte constitue l'entrée par laquelle le flux d'air entre dans le dispositif, et ne présente donc pas d'élément en saillie.

En outre, la hauteur H de la carène entre sa paroi inférieure et sa paroi supérieure est supérieure à la hauteur h de la turbine montée dans la carène, c'est-à-dire la hauteur entre la paroi inférieure de la carène et la périphérie supérieure de la turbine, correspondant sensiblement au diamètre de cette turbine plus un écart entre la périphérie inférieure de la turbine et ladite paroi inférieure, permettant ainsi la rotation de la turbine.

De préférence, la paroi supérieure de la carène est courbe, de forme concave à l'intérieur de l'enceinte et s'étend au-dessus de la turbine, écartée de ladite turbine pour permettre sa rotation et optionnellement avec un écart supplémentaire pour assurer un flux d'air au-dessus de la turbine.

Selon une forme de réalisation préférée du dispositif selon l'invention, la turbine présente des ailettes disposées radialement à sa périphérie, qui, en partie supérieure avant exposent respectivement la même face d'ailette au flux d'air débouchant du canal d'entrée d'air.

Ainsi de manière avantageuse, le flux d'air qui débouche du canal d'entrée d'air, débouche uniquement sur la partie supérieure avant de la turbine et agit donc sur la même face de l'ensemble des ailettes de cette partie supérieure avant.

De ce fait, le flux d'air se trouve principalement face aux ailettes sur la même face qui forment un obstacle contre lequel le flux d'air se heurte provoquant l'entraînement en rotation dans un seul sens de la turbine de manière bien plus efficace. En effet, si le canal débouchait aussi sur une portion de la partie inférieure de la turbine, ce flux d'air pourrait alors percuter également la face opposée des ailettes, contre laquelle le flux d'air peut glisser, générant un entraînement moins efficace mais pourrait également provoquer un effet d'entraînement en rotation en sens contraire.

Du fait du canal débouchant sur une turbine dont les ailettes en partie supérieure avant présentent la même face, le dispositif selon l'invention permet un passage de l'air quasiment sans contrainte sur la turbine et permet donc une production d'énergie optimale de l'air entrant.

Selon un mode de réalisation préféré, la turbine présente des ailettes disposés radialement à sa périphérie et qui présentent une forme courbe définissant une face concave et une face convexe, la turbine étant montée de sorte que les faces concaves des ailettes, en partie supérieure de la turbine, soient dirigées vers l'avant du dispositif. Ainsi de manière avantageuse, lorsque le canal d'air débouche dans la partie avant supérieure de la turbine, le flux d'air se trouve principalement face aux faces concaves des ailettes qui forment un obstacle contre lequel le flux d'air se heurte provoquant l'entraînement en rotation de la turbine de manière bien plus efficace que si le flux d'air venait percuter la face convexe des ailettes, contre laquelle le flux d'air pourrait glisser, générant un entraînement moins efficace.

De manière avantageuse, le dispositif éolien selon l'invention présente une face avant, ouverte, qui s'étend entre les extrémités de la paroi supérieure et la paroi inférieure, perpendiculaire à la paroi inférieure de telle sorte que, lorsque le dispositif éolien est posé au bord d'un toit de bâtiment, avec le bord avant de la paroi inférieure aligné avec le bord du toit, il présente sa face avant située dans le prolongement de la façade, sans aucun élément en saillie, alors que cela était le cas dans les dispositifs préalablement utilisés pour accroitre le rendement de la turbine en rabattant un maximum d'air vers celle-ci.

Le dispositif éolien selon l'invention permet donc de proposer des aménagements de bâtiments conformes aux normes d'urbanisme en vigueur tout en étant d'un rendement énergétique particulièrement élevé.

Selon un mode de réalisation préféré, la turbine est logée dans la partie arrière de la carène, le déflecteur s'étendant depuis la face avant jusqu'à sensiblement mi-hauteur de la turbine, le canal débouchant ainsi sur la partie supérieure avant de la turbine, située sensiblement entre l'axe de rotation de la turbine et la paroi supérieure de la carène.

De préférence, le déflecteur dit déflecteur avant est de forme courbe, définissant une surface à l'avant de forme convexe, dans le canal d'entrée d'air, favorisant le passage de l'air vers la partie supérieure de la turbine.

Le dispositif comporte en outre un déflecteur prolongeant le déflecteur avant, s'étendant depuis l'extrémité du déflecteur vers la face arrière, et définissant une surface arrière de nouveau vers la paroi inférieure de la carène, de forme concave, suivant la périphérie de la turbine. De préférence, ce deuxième déflecteur est d'une seule pièce avec le premier. Le volet de régulation est interposé entre les premier et deuxième déflecteurs.

De manière avantageuse, le flux d'air guidé vers la turbine par le déflecteur ne peut donc atteindre l'ouverture de sortie de la face arrière qu'au travers de la turbine, en entrant dans la partie supérieure avant de la turbine.

La paroi supérieure de la carène peut être également légèrement courbe, de forme concave à l'intérieur de l'enceinte ce qui permet de guider le flux d'air entrant jusqu'au-dessus de la turbine, un déflecteur ménagé depuis la paroi supérieure s'étend vers la face arrière de la carène et ferme le canal d'air après son passage au-dessus de la turbine et de l'axe de rotation de la turbine, l'air étant ainsi forcé de passer par la turbine pour s'échapper par l'ouverture de la face arrière.

De manière avantageuse, l'air est forcé de passer dans la turbine et on favorise ainsi le rendement du dispositif en concentrant l'air entrant sans qu'il puisse passer ailleurs qu'au travers de la turbine.

La carène est de préférence réalisée en matériaux métalliques, tels que de l'acier, par exemple galvanisé, de l'aluminium.

Le dispositif éolien selon l'invention comprend un générateur du type à aimants permanents, tel que par exemple un générateur dont la tension nominale est de 24 VAC triphasé sous courant de 42 A. Il comporte également un onduleur. Le rotor est choisi avec des dimensions, par exemple de 1.9 x 1.5 m, en polycarbonate et pouvant avoir une vitesse de rotation jusqu'à 200 tr/min.

De manière à garantir un fonctionnement sûr, on prévoit des moyens de commande électroniques permettant notamment la commande d'un arrêt d'urgence par blocage de la turbine et la commande d'une coupure électrique par un disjoncteur. De plus, pour assurer la maintenance, des moyens d'arrêt pour maintenance tels qu'un frein manuel sont prévus, et un contrôle du dispositif peut être réalisé 2 fois par an.

Le dispositif éolien selon un exemple de l'invention présente avantageusement les caractéristiques suivantes :
Puissance nominale : 1000 W
Puissance maximale : 1500 W.

De préférence, le dispositif éolien fonctionne aux vitesses suivantes :
Vitesse de production : 4 m/s
Vitesse optimale : 12 m/s
Vitesse de régulation : 18 m/s
Vitesse de coupure : 28 m/s.

L'invention concerne également l'utilisation d'au moins un dispositif éolien selon l'invention installé sur un bâtiment comportant un toit plat, caractérisé en ce que le dispositif est positionné sur le bord du toit de telle sorte que la face avant munie de son ouverture d'entrée d'air est positionnée dans le prolongement de la façade du bâtiment.

De manière avantageuse, la face avant étant perpendiculaire à la paroi inférieure de la carène du dispositif, le dispositif est installé sans faire saillie par rapport à la façade du bâtiment. Ainsi, l'invention concerne également une installation comprenant un dispositif éolien selon l'invention sur le toit plat d'un bâtiment dans laquelle le dispositif est positionné sur le bord du toit de telle sorte que la face avant munie de son ouverture d'entrée d'air est positionnée dans le prolongement de la façade du bâtiment, permet de récupérer l'énergie éolienne des flux d'air ascendants le long de la façade sans que le dispositif éolien ne soit en saillie par rapport à cette façade, tout en étant performant en termes de récupération d'énergie éolienne et simple à mettre en œuvre.

Lorsque le bâtiment présente un rebord entourant son toit plat, le dispositif est positionné sur le rebord, sa face avant aligné avec la face extérieure du rebord, tandis que la partie arrière du dispositif est portée par des moyens de fixation comprenant des montants s'étendant entre le toit et la partie arrière du dispositif et des moyens d'amortissement des vibrations tels que des plots anti-vibration.

Ainsi, des immeubles d'habitation collectifs, de bureaux ou des bâtiments industriels, peuvent être équipés facilement de dispositifs éoliens selon l'invention.

On décrira maintenant l'invention plus en détails en référence aux figures en annexe qui représentent :
[Fig. 1] une vue schématique en coupe longitudinale d'un dispositif éolien selon un mode de réalisation de l'invention ;
[Fig. 2] une vue en perspective avant du dispositif de la figure 1 ;
[Fig. 3] une vue en perspective latérale d'un dispositif éolien selon l'invention installé sur un bâtiment ;
[Fig. 4] une vue une vue schématique en coupe longitudinale d'un dispositif éolien selon un autre mode de réalisation de l'invention ;
[Fig. 5] une vue en perspective avant du dispositif de la figure 4 ;
[Fig. 6] une vue en perspective avant de plusieurs dispositifs installés sur le toit d'un bâtiment ;
[Fig. 7] une représentation graphique de la puissance du dispositif de l'invention en fonction de la vitesse du vent

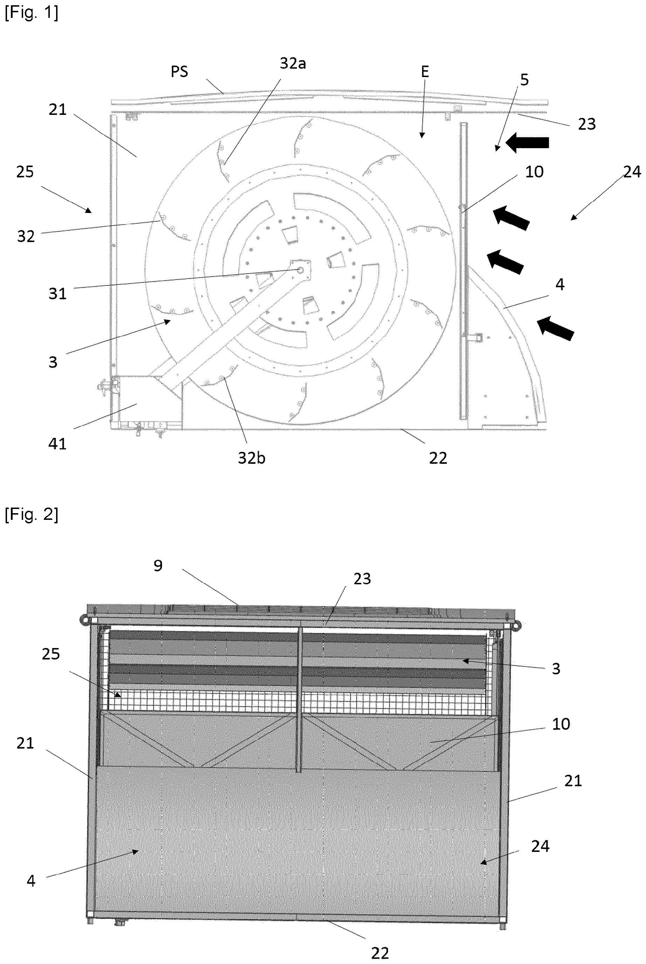

Comme on peut le voir à la figure 1, le dispositif éolien 1 selon l'invention comprend une carène 2 à l'intérieur de laquelle est montée en rotation une turbine 3. Cette turbine 3 présente un axe de rotation 31 et une pluralité d'ailettes 32 entraînant la turbine 3 en rotation autour de l'axe 31 sous l'effet d'un flux d'air agissant sur les ailettes 32. La turbine 3 est reliée à un générateur permettant de convertir l'énergie éolienne en énergie électrique utilisable.

La carène 2 présente deux parois latérales 21, une paroi inférieure 22 et une paroi supérieure 23 définissant une enceinte E sensiblement parallélépipédique dans laquelle la turbine 3 est montée avec son axe de rotation 31 s'étendant entre les deux parois latérales 21. La hauteur H de la carène 2 entre la paroi inférieure 22 et la paroi supérieure 23 est supérieure à la hauteur h de la turbine 3 montée dans la carène 2, la paroi supérieure 23 s'étendant écartée au-dessus de la périphérie supérieure de la turbine 3. Ainsi, la hauteur entre la paroi inférieure 22 et la périphérie supérieure de la turbine 3, correspond sensiblement au diamètre de cette turbine 3 plus l'écart entre la périphérie inférieure de la turbine 3 et la paroi inférieure 22, permettant ainsi la rotation.

La carène 2 est ainsi par exemple, d'une hauteur H de préférence comprise entre 1,2 et 2 m et est supérieure à celle h de la turbine 3 utilisée comprise entre 1 et 1, 8 m.

La carène 2 présente en outre une face dite avant 24 et une face dite arrière 25 pourvues respectivement d'une ouverture pour le passage de l'air au travers de l'enceinte E ainsi définie et donc au travers de la turbine 3 qui s'étend transversalement au passage d'air.

Le bord avant 231 de la paroi supérieure 23 et le bord avant 221 de la paroi inférieure 22 s'étendent parallèlement à l'aplomb l'un de l'autre, la face avant 24 ouverte étant ainsi définie entre ces deux bords 221, 231 et dans un plan perpendiculaire à la paroi inférieure 22.

Le bord arrière de la paroi supérieure 23 et le bord arrière de la paroi inférieure 22 s'étendent parallèles l'un à l'autre et à l'aplomb l'un de l'autre, la face arrière 25 ouverte étant ainsi définie entre ces deux bords et dans un plan perpendiculaire à la paroi inférieure 22. La paroi supérieure 23 peut également recevoir des panneaux solaires PS.

La carène 2 comporte en outre un déflecteur 4 s'étendant depuis l'extrémité avant de la paroi inférieure 22 en direction du haut et vers l'intérieur de l'enceinte E. Ce déflecteur 4 dit avant est de préférence de forme courbe, définissant une surface avant principalement de forme convexe.

Ce déflecteur 4 définit avec la paroi supérieure 23 de la carène 2, un canal de guidage ou d'entrée de l'air 5 entrant par la face avant 24 jusqu'à la turbine 3.

De manière avantageuse, le déflecteur 4 s'étend depuis la face avant 24 jusque devant la turbine 3, à une hauteur dans l'enceinte E qui correspond sensiblement à la mi-hauteur de la turbine 3, c'est-à-dire au moins jusqu'à la hauteur de l'axe de rotation 31 de la turbine 3.

Dans le mode de réalisation représenté à la figure 1, à l'arrière de ce déflecteur 4, entre le déflecteur 4 et la turbine 3 est ménagé un volet de régulation 10 s'étendant orthogonalement à la paroi inférieure 22 et entraînable en translation le long des parois latérales 21 entre une position d'ouverture complète du canal d'entrée d'air 5 et une position de fermeture complète de ce canal 5.

A cet effet, des moyens de guidage s'étendent orthogonalement à la paroi inférieure 22 et le long des parois latérales 21 pour permettre un entraînement en déplacement vertical du volet 10. Des moyens de levage tels que des câbles et un treuil permettent l'actionnement de ce volet 10 le long des moyens de guidage.

Le volet de régulation 10 permet donc de réguler le flux d'air entrant dans la turbine 3 en fonction notamment de la puissance du vent, ce volet 10 pouvant être positionné à des positions intermédiaires entre la position d'ouverture complète et la position de fermeture complète du canal d'entrée d'air 5

Un déflecteur 40 est ménagé entre la paroi inférieure 22 et la face arrière 25 s'étendant le long d'une partie inférieure arrière de la turbine 3. Ce déflecteur 40 délimite un compartiment 41 dans lequel l'électronique de contrôle du dispositif ainsi que le générateur raccordé à la turbine 3 peuvent être logés. Un tel compartiment 41 est accessible par la face arrière 25 du dispositif ce qui permet une maintenance aisée. Dans ce compartiment 41 est également logés le treuil des moyens d'actionnement du volet de régulation 10.

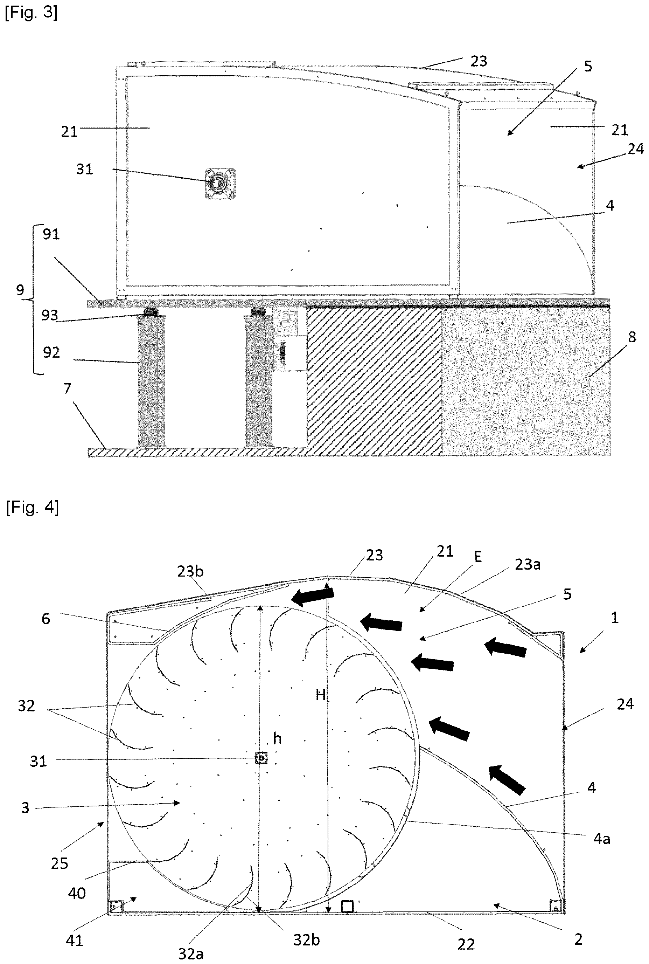

Puis ce déflecteur 4 présente ensuite une partie définissant une surface arrière 4a s'étendant de nouveau vers la paroi inférieure 22 de la carène 2 de forme concave et qui suit la périphérie de la turbine 3. Le flux d'air (représenté par des flèches sur les figures 1 et 4) guidé vers la turbine 3 par le déflecteur 4 ne peut donc atteindre l'ouverture de sortie de la face arrière 25 qu'au travers de la turbine 3.

De préférence, la paroi supérieure 23 de la carène 2 est également courbe, de forme concave à l'intérieur de l'enceinte E ce qui permet de guider le flux d'air entrant jusqu'au-dessus de la turbine 3.

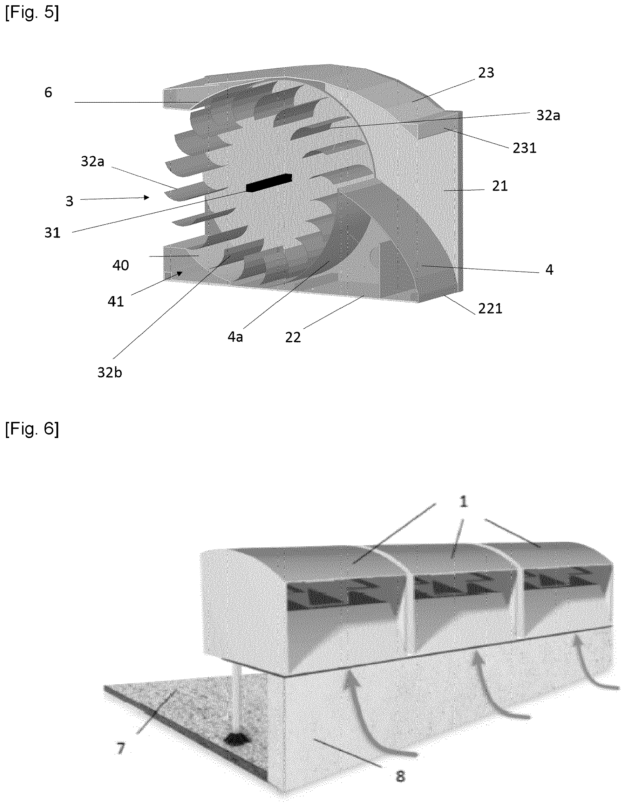

Dans le mode de réalisation de l'invention représenté aux figures 4 et 5, la paroi supérieure 23 est de forme courbe avec une partie ascendante 23a depuis la face avant jusqu'à un sommet de hauteur H définissant la hauteur de la carène 2, puis une partie descendante 23b vers la face arrière 25. Le sommet de la paroi supérieure 23 est sensiblement au milieu de la paroi 23. La turbine 3 présente une hauteur h inférieure à H et est en outre positionnée dans la carène 2 du côté de la face arrière 25 de la carène 2, avec son axe de rotation 31 décalé par rapport au sommet de la paroi supérieure 23, la partie 23b de la paroi supérieure 23 étant écartée de la turbine 3.

Un déflecteur 6 ménagé depuis la partie descendante 23b de la paroi supérieure 23 s'étend vers la face arrière 25 de la carène 2 et ferme le canal d'air 5 au-dessus de la turbine 3, après l'axe de rotation 31. De ce fait, le flux d'air (représenté par des flèches figure 4) s'écoule jusqu'au-dessus de la turbine 3 puis est guidé, rabattu vers la turbine 3, forcé de passer par ladite turbine 3 pour s'échapper par l'ouverture de la face arrière 25.

La turbine 3 comporte des ailettes 32 s'étendant radialement à la périphérie de la turbine 3. Chaque ailette 32 présente une forme courbe présentant ainsi une face concave 32a et une face convexe 32b.

La turbine 3 est logée dans la partie arrière de l'enceinte E définie par la carène 2 de telle sorte que le canal d'air 5 de la face avant 24 guide le flux d'air uniquement vers la partie supérieure de la turbine 3 où ce flux d'air agit sur les ailettes 32 pour entraîner la turbine 3.

Les ailettes 32 de la turbine 3 dans la partie supérieure avant de cette turbine 3 sont agencées à la périphérie de la turbine 3 de sorte que, lorsque le flux d'air arrive sur la turbine 3 dans la partie supérieure de celle-ci, seules les faces concaves 32a des ailettes courbes 32 forment un obstacle au flux d'air. De ce fait, le flux d'air guidé par le canal 5 percute les faces concaves 32a des ailettes 32 ce qui induit l'entraînement en rotation de la turbine 3.

Le flux d'air arrivant sur les faces convexes 32b des ailettes 32 est simplement dévié sans résistance. Le flux d'air en sortie après avoir traversé la turbine 3 peut encore percuter les faces concaves 32 des ailettes 32 situées sur la partie arrière de la turbine 3 et agir encore sur la turbine 3.

Ainsi, la structure du dispositif selon l'invention permet au flux d'air de traverser la turbine 3 et de l'actionner en rotation pour s'évacuer par l'ouverture de sortie de la face arrière 25 quasiment sans résistance.

Le passage de l'air dans le dispositif éolien s'effectue ainsi sans perte au niveau du flux d'air et sans que le flux d'air n'agisse sur la turbine 3 en créant des résistances, pouvant créer des pertes dans le rendement. En effet, le flux d'air passe au travers de la turbine 3 en entrée en repoussant les ailettes 32 puis en sortant en repoussant également les ailettes 32 sur sa trajectoire toujours dans le même sens d'entraînement en rotation de la turbine 3.

En effet, si le déflecteur 4 guidait le flux d'air plus bas sur la turbine 3 en entrée, ce flux d'air pourrait induire une frappe des ailettes 32 sur l'une ou l'autre des faces 32a, 32b de celles-ci mais en sens opposé.

Comme on peut le voir sur la figure 3, un exemple de dispositif éolien selon l'invention est positionné sur un toit de bâtiment B. Le bâtiment présente un toit plat 7 ou toit terrasse, généralement entouré d'un rebord 8 ou acrotère. Le dispositif éolien selon l'invention est positionné sur le bord du toit de telle sorte que la face avant 24 munie de son ouverture est positionnée dans le prolongement de la façade du bâtiment et du rebord 8, donc sans faire saillie par rapport à ce rebord 8 ou cette façade.

Le dispositif éolien positionné sur le bord du toit 7 dans cette installation permet de récupérer le flux d'air glissant le long de la façade vers le haut pour le guider directement vers la turbine 3 (voir les flèches sur la figure 6).

Le canal d'entrée d'air 5 défini dans le dispositif 1 permet de capturer et guider le flux d'air ascendant vers la partie supérieure avant de la turbine 3 de manière suffisamment efficace sans qu'il soit nécessaire de prévoir une surface en saillie de la façade pour capturer plus d'air ascendant.

La carène 2 est donc installée sur des moyens de fixation 9 comprenant une platine de support 91 dont une extrémité est posée sur le rebord 8 et l'autre extrémité est reliée au toit plat 7 par l'intermédiaire de pieds de fixation 92. La face avant 24 de la carène 2 est montée sur la platine de fixation 91 alignée avec la face avant du rebord 8 et/ou la façade du bâtiment.

Des moyens amortisseurs de vibration 93 tels que des plots anti-vibration sont en outre mis en place entre les pieds de fixation 92 et la platine 91 afin de limiter la transmission des vibrations du dispositif au toit.

Comme cela est visible à la figure 6, on installe une pluralité de dispositifs éoliens selon l'invention, côte à côte sur le bord d'un toit.

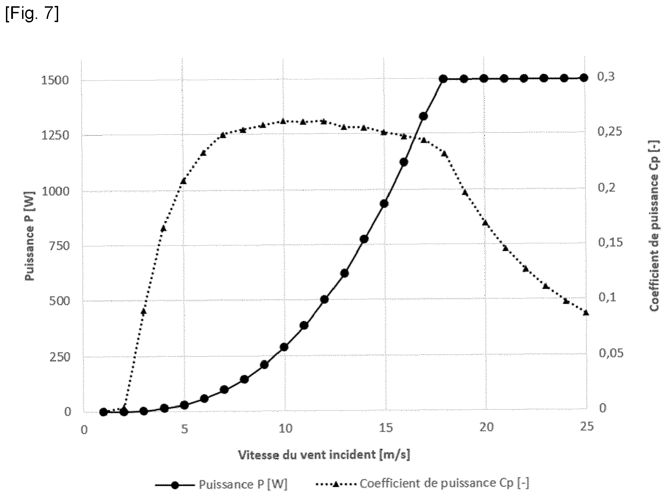

La figure 7 représente la puissance générée par le dispositif en fonction de la vitesse du vent. Un dispositif éolien selon l'invention permet un rendement de l'ordre de 26%, ne travaillant qu'en traînée, sans effet de portance des ailettes ou pales, de l'ordre du double des dispositifs précédemment utilisés.

Le démarrage peut se faire pour une vitesse de vent en dessous de 10km/h et la production d'électricité est assurée jusqu'à 100km/h de vent, avec un optimum de rendement autour de 45 km/h, ce qui rend le dispositif éolien ou éolienne selon l'invention parfaitement adaptée à un fonctionnement urbain, sur des bâtiments.

## Revendications

1. Dispositif éolien (1) comprenant une carène (2) qui présente deux parois latérales (21), une paroi inférieure (22) et une paroi supérieure (23) définissant une enceinte (E) présentant une face dite avant (24) et une face dite arrière (25) pourvues respectivement d'une ouverture, enceinte (E) dans laquelle une turbine (3) est montée entraînable en rotation autour d'un axe de rotation (31) s'étendant horizontalement entre les deux parois latérales (21), sous l'effet d'un flux d'air entrant depuis la face avant (24), le dispositif comprenant un déflecteur (4), s'étendant depuis la partie inférieure de la face avant (24) vers l'intérieur de l'enceinte (E) et en direction de la paroi supérieure (23) et définissant avec cette dernière un canal d'entrée d'air (5) guidant le flux d'air jusqu'à la turbine (3), **caractérisé en ce que** le déflecteur (4) s'étend depuis la face avant (24) jusqu'à la périphérie de la turbine (3), au moins jusqu'à mi-hauteur de ladite turbine (3), et la paroi supérieure (23) de la carène (2) s'étend au-dessus de la turbine (3), écartée de ladite turbine (3), le canal d'entrée d'air (5) défini par ledit déflecteur (4) et ladite paroi supérieure (23) débouchant sur la partie supérieure de la turbine (3), s'étendant sensiblement entre l'axe de rotation (31) et la paroi supérieure de la carène (2).

2. Dispositif (1) selon la revendication 1, **caractérisé en ce qu'**il comporte, entre le déflecteur (4) et la turbine (3), un volet de régulation (10) du flux d'air entrant, s'étendant orthogonalement à la paroi inférieure (22) et entraînable en translation le long des parois latérales (21) entre une position d'ouverture du canal d'entrée d'air (5) et une position de fermeture de ce canal d'entrée d'air (5).

3. Dispositif (1) selon la revendication 2, **caractérisé en ce qu'**il comporte des moyens d'entrainement en déplacement du volet (10) qui sont constitués de moyens de guidage du volet (10) le long des parois latérales (21) tels que des rails et des moyens de levage du volet (10) tels que des câbles et un treuil.

4. Dispositif (1) selon l'une des revendication 2 ou 3, **caractérisé en ce que** le volet de régulation (10) est positionnable à différentes positions entre la position d'ouverture et la position de fermeture pour réguler le flux d'air entrant dans la turbine (3).

5. Dispositif (1) selon l'une des revendications 1 à 4, **caractérisé en ce que** la face avant (24) de la carène (2), s'étend perpendiculaire à la paroi inférieure (22), entre les extrémités des parois inférieure (22) et supérieure (23) qui sont à l'aplomb l'une de l'autre.

6. Dispositif (1) selon l'une des revendications 1 à 5, **caractérisé en ce que** la paroi supérieure (23) de la carène (2) est courbe, de forme concave à l'intérieur de l'enceinte (E) et s'étend au-dessus de la turbine (3), écartée de ladite turbine (3).

7. Dispositif (1) selon l'une des revendications 1 à 6, **caractérisé en ce que** la turbine (3) présente des ailettes (31) disposées radialement à sa périphérie, qui, en partie supérieure avant, exposent respectivement la même face d'ailette (31) au flux d'air débouchant du canal d'entrée d'air (5).

8. Dispositif (1) selon la revendication 7, **caractérisé en ce que** les ailettes (31) présentent une forme courbe définissant une face concave (32a) et une face convexe (32b), la turbine (3) étant montée de sorte que les faces concaves (32a) des ailettes (31), en partie supérieure de la turbine (3), soient dirigées vers l'avant du dispositif et en regard du canal d'entrée d'air.

9. Dispositif (1) selon l'une des revendications 1 à 8, **caractérisé en ce que** le déflecteur dit avant (4) est de forme courbe, définissant une surface à l'avant de forme convexe.

10. Dispositif (1) selon l'une des revendications 1 à 9, **caractérisé en ce que** la hauteur H de la carène (2) entre la paroi inférieure (22) et la paroi supérieure (23) est supérieure à la hauteur h de la turbine (3) montée dans la carène (2), la paroi supérieure (23) s'étendant écartée au-dessus de la périphérie supérieure de la turbine (3).

11. Dispositif (1) selon l'une des revendications 1 à 10, **caractérisé en ce qu'**un déflecteur (6) ménagé depuis la paroi supérieure (23) s'étend vers la face arrière (25) de la carène (2) et ferme le canal d'air (5) après son passage au-dessus de la turbine (3), et après l'axe de rotation (31) de la turbine.

12. Dispositif (1) selon l'une des revendications 1 à 11, **caractérisé en ce qu'**un déflecteur (40) est ménagé entre la paroi inférieure (22) et la face arrière (25), s'étendant le long de la turbine (3), ce déflecteur (40) délimitant un compartiment (41).

13. Dispositif (1) selon la revendication 12, **caractérisé en ce que** l'électronique de contrôle du dispositif ainsi que le générateur raccordé à la turbine (3) sont logés dans le compartiment (41).

14. Dispositif (1) selon l'une des revendications 1 à 13, **caractérisé en ce qu'**il comporte des moyens de fixation (9) du dispositif sur un toit de bâtiment comprenant des moyens d'amortissement des vibrations (93).

15. Utilisation d'au moins un dispositif éolien (1) selon l'une des revendications 1 à 14 installé sur un bâtiment comportant un toit (7) plat, **caractérisé en ce que** le dispositif est positionné sur le bord du toit de telle sorte que la face avant (24) munie de son ouverture d'entrée d'air est positionnée dans le prolongement de la façade du bâtiment.
